# EUROPEAN PATENT SPECIFICATION

(11) **EP 3 315 847 B1**
(45) Date of publication and mention of the grant of the patent: **30.12.2020**
(21) Application number: 17198163.2
(22) Date of filing: 24.10.2017
(51) Int. Cl.: F21S 8/00, B60Q 1/24, B64D 47/02, F21V 29/71, F21W 131/406, F21V 29/83

(54) **LED SEARCHLIGHT AND METHOD**
LED-SUCHLICHT UND VERFAHREN
PROJECTEUR À DEL ET PROCÉDÉ

(30) Priority: 31.10.2016 US 201615339134
(43) Date of publication of application: 02.05.2018
(73) Proprietor: Honeywell International Inc., Morris Plains, NJ 07950 (US)
(72) Inventor: GIFFEN, Craig, Morris Plains, NJ 07950 (US)
(74) Representative: Houghton, Mark Phillip

(56) References cited:
- EP-A1- 1 918 204
- EP-A1- 2 743 566
- US-A- 5 695 272
- US-A1- 2002 075 679
- US-A1- 2011 089 830
- US-A1- 2011 285 292
- US-A1- 2013 088 864

## Description

### TECHNICAL FIELD

The technical field generally relates to search lights as are often found on aircraft and other search and rescue vehicles, and in particular, to a LED-based searchlight having a cooling efficient housing and heat sink structure and a method of cooling a searchlight.

### BACKGROUND

Searchlights are frequently used on search and rescue vehicles including search and rescue aircraft, such as helicopters, to illuminate areas of interest to the aircraft pilot and/or crew. There are many searchlight designs, including halogen / incandescent tungsten filament designs. Within the weight and space limitations of an aircraft, these designs will often include multiple illumination sources adjacent a reflector and disposed within a housing covered with a glass or plastic lens.

An application where high power density light emitting diodes (LEDs) might provide a good design solution is searchlights. LED technology permits ever brighter constructions than existing incandescent technologies. Furthermore, the power or light output of an LED may be increased by increasing the die size. This allows still brighter LED arrays with fewer LED elements. Increasing die size to increase light output, however, increases the power density of the LED, which also consolidates heat generation and complicates cooling requirements.

Accordingly, it is desirable to provide a searchlight construction using LEDs as a light source with comparable or superior light emitting capability to halogen/incandescent tungsten filament designs, and efficient cooling in all operating environments. Other desirable features and characteristics of the herein described embodiments will become apparent from the subsequent detailed description and the appended claims, taken in conjunction with the accompanying drawings and the foregoing technical field and background.

US2011/285292 discloses exterior architectural fixtures that use high-intensity LED light sources for illuminating large structures, that uses separate heat sinks for each lighting unit to provide improved hear dissipation properties.

This document discloses the features of the preambles of claims 1 and 8.

US2013/088864 discloses a modular angled street light fixture that includes a central portion for connect the interlocking modular lighting units together, with separate heat sinks for each unit.

### SUMMARY

The present invention in its various aspects is as set out in the appended claims.

According to claim 1 a searchlight has a first housing portion and a second housing portion, wherein each of the first housing portion and the second housing portion has operably secured to form a reflector cavity, a heat sink, a reflector and a lens. The first housing portion and the second housing portion are joined to form a housing assembly. The first housing portion heat sink and the second housing portion heat sink are disposed adjacent to one another and form a cooling medium flow path there between, and the heat sink elements of each heat sink thermally communicate with the flow path. A first LED is directly thermally coupled to the heat sink within the first housing portion reflector cavity and a second LED is directly thermally coupled to the heat sink within the second housing portion reflector cavity. The searchlight is characterized by comprising a circuit/wiring block disposed within the heat sink defined flow path and mechanically joining the first housing portion heat sink and the second housing portion heat sink.

Claim 8 defines a method of forming the searchlight of claim 1.

### BRIEF DESCRIPTION OF THE DRAWINGS

The various embodiments will hereinafter be described in conjunction with the following drawing figures, wherein like numerals denote like elements, and wherein:
Fig. 1 is an expanded assembly view of a searchlight in accordance with the herein described embodiments;
Fig. 2 is a front view of the searchlight depicted in Fig. 1;
Fig. 3 is a rear view of the searchlight depicted in Fig. 1;
Fig. 4 is a top view of the searchlight depicted in Fig. 1; and
Fig. 5 is a left side view of the searchlight depicted in Fig. 1.

### DETAILED DESCRIPTION

The following detailed description is merely exemplary in nature and is not intended to limit the application and uses. Furthermore, there is no intention to be bound by any expressed or implied theory presented in the preceding technical field, background, brief summary or the following detailed description. It should be understood that throughout the drawings, corresponding reference numerals indicate like or corresponding parts and features. As used herein, the terms "system" or "module" may refer to any combination or collection of mechanical and electrical hardware, software, firmware, electronic control component, processing logic, and/or processor device, individually or in any combination, including without limitation: application specific integrated circuit (ASIC), an electronic circuit, a processor (shared, dedicated, or group), memory that executes one or more software or firmware programs, a combinational logic circuit, and/or other suitable components that provide the described functionality.

Embodiments of a searchlight and method of forming the same may be described herein in terms of functional and/or logical block components and various processing steps. It should be appreciated that such block components may be realized by any number, combination or collection of mechanical and electrical hardware, software, and/or firmware components configured to perform the specified functions. For example, an embodiment may employ various combinations of electrical components, e.g., sensors, integrated circuit components, memory elements, digital signal processing elements, logic elements, look-up tables, or the like, which may carry out a variety of functions under the control of one or more microprocessors or other control devices. In addition, those skilled in the art will appreciate that embodiments may be practiced in conjunction with any number of mechanical and/or electronic systems, and that the systems described herein are merely exemplary embodiments.

For the sake of brevity, conventional components and techniques and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in various embodiments.

An LED based searchlight in accordance with the herein described embodiments incorporates an LED device directly attached to a heat sink with no intermediate metal core or glass-reinforced epoxy laminate circuit card. A searchlight according to the herein described embodiments further uses housing portions of the searchlight for additional heat dissipation. The searchlight housing is uniquely formed to expose a heat sink and housing structure to a flow of cooling medium.

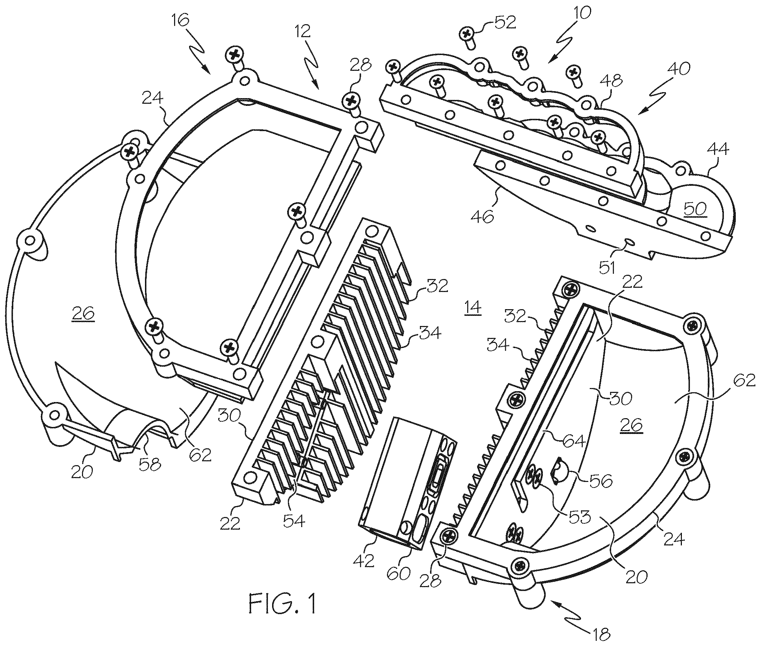

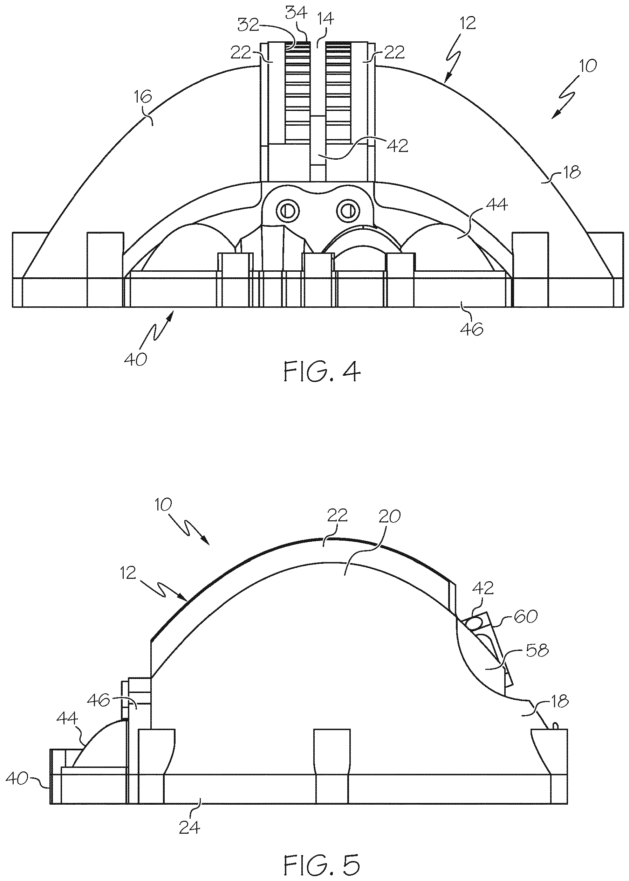

Referring to Figs. 1 - 5, a searchlight 10 includes a housing structure 12 including a cooling medium flow path 14. The housing structure 12 includes a first housing section 16 and a second housing section 18. It will be appreciated that in accordance with the herein described embodiments, the first housing section 16 and the second housing section 18 are symmetric to each other. The following discussion of the first housing section 16 is exemplary, and it will be understood that the second housing section 18 is generally identical but not symmetric. Like reference numerals are used to identify like, symmetrical elements between the first and second housing sections 16 and 18.

The first housing section 16 includes a reflector 20, a heat sink 22 and a lens 24. The reflector 20 and the heat sink 22 are operably joined to form a reflector cavity 26. The reflector 20 and the heat sink 22 may be operably joined by bonding, welding, fastening and/or the like. The lens 24 is secured to the reflector 20 and the heat sink 22 by fasteners (one of which is indicated as fastener 28), although the lens could be otherwise secured to the reflector 20 and the heat sink 22. Removable fastening of the lens 24 permits removal of the lens 24 for servicing of components disposed within the reflector cavity 26. The joining of the reflector 20, the heat sink 22 and the lens 24 is accomplished in a way to ensure the reflector cavity is weather-tight, as it is intended that the searchlight 10 will be used in all weather conditions.

The heat sink 22 may be made of a suitable low thermal resistance material, such as aluminum, aluminum alloys, metal, metal alloys, thermally conductive polymers and the like. The heat sink 22 has a cavity side surface 30 and a fin side surface 32. The cavity side surface 30 may be made reflective by polishing, by application of a reflective coating or by any suitable method. The fin side surface 32 is formed to include a plurality of heat dissipating elements, such as cooling fins 34, or other suitable structures that enhance the dissipation of heat from the heat sink 22 under the flow of a cooling media. As depicted, in the housing structure 12, the cooling fins advantageously extend into the cooling medium flow path 14.

The first housing section 16 and the second housing section 18 are joined by a third housing section 40 and by a wiring / circuit block 42. The third housing section 40 is of similar construction as the first and second housing sections 16 and 18, and includes a reflector 44, a heat sink 46 and a lens 48 enclosing a reflector cavity 50 and secured by threaded fastener (one of which is indicated as fastener 52). The heat sink 46 suitably mechanically joins the first housing section 16 and the second housing section 18 such as engaging the respective heat sinks 22 by suitable fasteners (not depicted) extending through apertures 51.

A circuit / wiring block 42 is disposed between and secures to the heat sinks 22 and 32. In this regard, portions of the fins 34 may be removed forming a recess 54 into which the circuit / wiring block 42 is fitted and is secured, such as by threaded fasteners (one of which is indicated as fastener 53). The circuit / wiring block 42 is thereby advantageously disposed within the flow path 14 as well as being in thermal communication with the heat sinks 22 to ensure cooling of LED driver and other circuity (not depicted) disposed therein.

Disposed within the reflector cavity 26 on the cavity side surface 30 is a LED device 56. The LED device 56 may be a single LED, an array of LED devices, a single die formed with multiple LED elements, or similar structures. The LED device 56 may emit light in the visible spectrum, the infrared spectrum, other spectrums visible or invisible and combinations thereof. The LED device 56 is in direct thermal contact with the cavity side surface 30, and hence to the heat sink 22. Heat from the LED device 56 is efficiently transferred from LED device 56 to the heat sink 22. From the cavity side surface 30, heat is communicated through the heat sink 22, which has low thermal resistance, to the fin side surface 32, which in operation is exposed to cooling medium passing through the flow path 14.

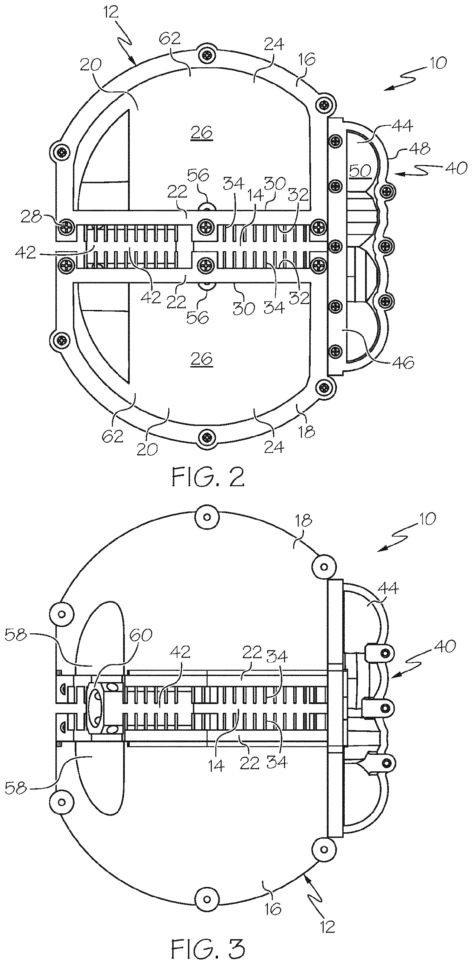

The heat sink 22 is formed with a via (not depicted) through which a wiring connection from the LED device 56 is made to the wiring / circuit block 42. The reflectors 20 formed with a depression 58 and the circuit / wiring block 42 is formed with an external wiring coupling surface 60 (Fig. 3) by which connections to external wiring may be made. The heat sinks 22 are further formed with a passage or via 64 through which a wiring connection is made from the third housing section 40, which may be an infrared housing section, to the circuit / wiring block 42.

In addition to heat sinks 22, the reflectors 20 may be constructed of low thermal resistance material, such as aluminum, aluminum alloys, thermally conductive polymers and the like. When so constructed, the reflectors 20, being exposed to the environment during use of the searchlight 10, also contribute to heat dissipation.

The cavity side surface 30 cooperates with a reflector surface 62 of the reflector 20 to optimize reflected light output of the searchlight 10. The reflector surface 62 may be made by polishing, providing a reflective coating and the like. Attaching the LED device 56 directly to the heat sink 22 eliminates the traditional circuit card to which LEDs are often attached. This allows more space within the reflector cavity 26 to be used for reflector area, i.e., the cavity side surface 30 and the reflector surface 62. Increasing the reflector area available to the LED device 56 improves illumination. Eliminating a circuit card or similar structure from within the reflector cavity 26 eliminates the thermal resistance offered by the circuit card to heat transfer from the LED device 56 to the heat sink 22. In addition to lowering the resistance to heat transfer by eliminating the circuit card, the flow path 14 allows for the heat sink 22 to be directly exposed to a flow of cooling medium so the LED device 56 can be cooled as efficiently as possible.

The searchlight 10 provides for directly exposing the reflector 20 and heat sink 22 to the environment. This is made possible by splitting the search light into at least the first housing portion 16 and the second housing portion 18. Splitting the searchlight 10 into multiple portions allows for the formation of air flow paths, allowing airflow to pass directly over the heat sink 22 where the greatest heat flux exists, and cooling the LED device 56 at an increased rate.

Embodiments described herein facilitate the use of high power LED device that will allow comparable illumination levels to existing searchlight constructions. Use of heat sinks and reflectors as heat sinks provide an increase in the mass of the heat sink capacity as well as increase in heat sink area.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A searchlight (10) having:
a first housing portion (16) and a second housing portion (18), each of the first housing portion (16) and the second housing portion (18) comprising operably secured to form a reflector cavity (26): a heat sink (22), a reflector (20) and a lens (24);
the first housing portion (16) and the second housing portion (18) being joined to form a housing assembly, wherein the first housing portion heat sink (22) and the second housing portion heat sink (22) are disposed adjacent to one another and form a cooling medium flow path (14) there between, such that heat sink elements of each heat sink (22) thermally communicate with the flow path (14);
a first LED device (56) directly thermally coupled to the heat sink (22) within in the first housing portion reflector cavity (26) and a second LED device (56) directly thermally coupled to the heat sink within the second housing portion reflector cavity (26), **characterized in that** the searchlight comprises;
a circuit / wiring block (42) disposed within the heat sink defined flow path (14) and mechanically joining the first housing portion heat sink (22) and the second housing portion heat sink (22).

2. The searchlight of claim 1, wherein the heat sink elements extend into the flow path (14).

3. The searchlight of claim 1, comprising a third housing portion (40) joining the first housing portion (16) and the second housing portion (18).

4. The searchlight of claim 3, wherein the third housing portion (40) comprises operably secured to form a third reflector cavity (50): a heat sink (46), a reflector (44) and a lens (48), and a third LED device (56), wherein the third LED device (56) is disposed within third reflector cavity (50).

5. The searchlight of claim 1, wherein searchlight emits light in the visible or infrared spectrum.

6. The searchlight of claim 1, wherein the reflectors (20) have low thermal resistance.

7. The searchlight of claim 1, wherein the first or second LED (56) device is secured to a reflective surface of the heat sink (22).

8. A method of forming the search light of claim 1, wherein the search light comprises a searchlight (10) having a first housing portion (16) and a second housing portion (18), each of the first housing portion (16) and the second housing portion (18) comprising operably secured to form a reflector cavity (26):
a heat sink (22), a reflector (20), a circuit / wiring block (42) and a lens (24); the method comprising the steps:
arranging the heat sinks (22) to form a cooling medium flow path (14) there between,
securing an LED device (56) to the heat sink (22) within each of respective reflector cavities (26), and
**characterized in that** the method includes, disposing the circuit/wiring block within the heat sink defined flow path (14) and mechanically joining the first housing portion heat sink (22) and the second housing portion heat sink (22).

## Patentansprüche

1. Suchlicht (10), das aufweist:
einen ersten Gehäuseabschnitt (16) und einen zweiten Gehäuseabschnitt (18), wobei jeder des ersten Gehäuseabschnitts (16) und des zweiten Gehäuseabschnitts (18) betriebsfähig befestigt Folgendes umfasst, um einen Reflektorhohlraum (26) zu bilden: einen Kühlkörper (22), einen Reflektor (20) und eine Linse (24);
wobei der erste Gehäuseabschnitt (16) und der zweite Gehäuseabschnitt (18) verbunden sind, um eine Gehäuseanordnung zu bilden, wobei der erste Gehäuseabschnitt-Kühlkörper (22) und der zweite Gehäuseabschnitt-Kühlkörper (22) benachbart zueinander angeordnet sind und dazwischen einen Kühlmediumströmungsweg (14) bilden, so dass Kühlkörperelemente jedes Kühlkörpers (22) thermisch mit dem Strömungsweg (14) kommunizieren;
eine erste LED-Vorrichtung (56), die direkt thermisch mit dem Kühlkörper (22) innerhalb des ersten Gehäuseabschnitt-Reflektorhohlraums (26) gekoppelt ist, und eine zweite LED-Vorrichtung (56), die direkt thermisch mit dem Kühlkörper innerhalb des zweiten Gehäuseabschnitt-Reflektorhohlraums gekoppelt ist (26), **dadurch gekennzeichnet, dass** das Suchlicht umfasst;
einen Schaltungs-/Verdrahtungsblock (42), der innerhalb des Strömungswegs (14), der durch den Kühlkörper definiert ist, angeordnet ist und den ersten Gehäuseabschnitt-Kühlkörper (22) und den zweiten Gehäuseabschnitt-Kühlkörper (22) mechanisch verbindet.

2. Suchlicht nach Anspruch 1, wobei sich die Kühlkörperelemente in dem Strömungsweg (14) erstrecken.

3. Suchlicht nach Anspruch 1, das einen dritten Gehäuseabschnitt (40) umfasst, der den ersten Gehäuseabschnitt (16) und den zweiten Gehäuseabschnitt (18) verbindet.

4. Suchlicht nach Anspruch 3, wobei der dritte Gehäuseabschnitt (40) betriebsfähig befestigt Folgendes umfasst, um einen dritten Reflektorhohlraum (50) zu bilden: einen Kühlkörper (46), einen Reflektor (44) und eine Linse (48) und eine dritte LED-Vorrichtung (56), wobei die dritte LED-Vorrichtung (56) innerhalb des dritten Reflektorhohlraums (50) angeordnet ist.

5. Suchlicht nach Anspruch 1, wobei das Suchlicht Licht im sichtbaren oder infraroten Spektrum emittiert.

6. Suchlicht nach Anspruch 1, wobei die Reflektoren (20) einen niedrigen Wärmewiderstand aufweisen.

7. Suchlicht nach Anspruch 1, wobei die erste oder zweite LED-Vorrichtung (56) an einer reflektierenden Oberfläche des Kühlkörpers (22) befestigt ist.

8. Verfahren zum Bilden des Suchlichts nach Anspruch 1, wobei das Suchlicht ein Suchlicht (10) umfasst, das einen ersten Gehäuseabschnitt (16) und einen zweiten Gehäuseabschnitt (18) aufweist, wobei der erste Gehäuseabschnitt (16) und der zweite Gehäuseabschnitt (18) betriebsfähig befestigt Folgendes umfassen, um einen Reflektorhohlraum (26) zu bilden:
einen Kühlkörper (22), einen Reflektor (20), einen Schaltungs-/Verdrahtungsblock (42) und eine Linse (24); wobei das Verfahren die Schritte umfasst:
Einrichten der Kühlkörper (22), um dazwischen einen Kühlmediumströmungsweg (14) zu bilden,
Befestigen einer LED-Vorrichtung (56) an dem Kühlkörper (22) innerhalb jedes der jeweiligen Reflektorhohlräume (26), und
**dadurch gekennzeichnet, dass** das Verfahren das Anordnen des Schaltungs-/Verdrahtungsblocks innerhalb des Strömungswegs (14), der von dem Kühlkörper definiert wird, und das mechanische Verbinden des ersten Gehäuseabschnitt-Kühlkörpers (22) und des zweiten Gehäuseabschnitt-Kühlkörpers (22) beinhaltet.

## Revendications

1. Projecteur (10) ayant :
une première partie de boîtier (16) et une deuxième partie de boîtier (18), chacune de la première partie de boîtier (16) et de la deuxième partie de boîtier (18) comprenant, fixés fonctionnellement pour former une cavité de réflecteur (26) : un dissipateur thermique (22), un réflecteur (20) et une lentille (24) ;
la première partie de boîtier (16) et la deuxième partie de boîtier (18) étant jointes pour former un ensemble de boîtier, dans lequel le dissipateur thermique de première partie de boîtier (22) et le dissipateur thermique de deuxième partie de boîtier (22) sont disposés adjacents l'un à l'autre et forment une voie d'écoulement (14) de milieu de refroidissement entre eux, de sorte que des éléments de dissipateur thermique de chaque dissipateur thermique (22) communiquent thermiquement avec la voie d'écoulement (14) ;
un premier dispositif à DEL (56), directement couplé thermiquement au dissipateur thermique (22) à l'intérieur de la cavité de réflecteur de première partie de boîtier (26), et un deuxième dispositif à DEL (56), directement couplé thermiquement au dissipateur thermique dans la cavité de réflecteur de deuxième partie de boîtier (26), **caractérisé en ce que** le projecteur comprend ;
un circuit/bloc de câblage (42), disposé à l'intérieur de la voie d'écoulement (14) définie de dissipateur thermique et joignant mécaniquement le dissipateur thermique de première partie de boîtier (22) et le dissipateur thermique de deuxième partie de boîtier (22).

2. Projecteur selon la revendication 1, dans lequel les éléments de dissipateur thermique s'étendent dans la voie d'écoulement (14).

3. Projecteur selon la revendication 1, comprenant une troisième partie de boîtier (40) joignant la première partie de boîtier (16) et la deuxième partie de boîtier (18).

4. Projecteur selon la revendication 3, dans lequel la troisième partie de boîtier (40) comprend, fixés fonctionnellement pour former une troisième cavité de réflecteur (50) : un dissipateur thermique (46), un réflecteur (44) et une lentille (48), ainsi qu'un troisième dispositif à DEL (56), dans lequel le troisième dispositif à DEL (56) est disposé à l'intérieur de la troisième cavité de réflecteur (50).

5. Projecteur selon la revendication 1, dans lequel le projecteur émet de la lumière dans le spectre visible ou infrarouge.

6. Projecteur selon la revendication 1, dans lequel les réflecteurs (20) ont une faible résistance thermique.

7. Projecteur selon la revendication 1, dans lequel le premier ou le deuxième dispositif à DEL (56) est fixé à une surface réfléchissante du dissipateur thermique (22).

8. Procédé de formation de la lumière de recherche selon la revendication 1, dans lequel la lumière de recherche comprend un projecteur (10) ayant une première partie de boîtier (16) et une deuxième partie de boîtier (18), chacune de la première partie de boîtier (16) et de la deuxième partie de boîtier (18) comprenant, fixés fonctionnellement pour former une cavité de réflecteur (26) :
un dissipateur thermique (22), un réflecteur (20), un circuit/bloc de câblage (42) et une lentille (24) ; le procédé comprenant les étapes suivantes :
la disposition des dissipateurs thermiques (22) pour former entre eux une voie d'écoulement (14) de milieu de refroidissement,
la fixation d'un dispositif à DEL (56) au dissipateur thermique (22) à l'intérieur de chacune des cavités de réflecteur (26) respectives et
**caractérisé en ce que** le procédé comprend la disposition du circuit/bloc de câblage dans la voie d'écoulement (14) définie de dissipateur thermique et la jonction mécanique du dissipateur thermique de première partie de boîtier (22) et du dissipateur thermique de deuxième partie de boîtier (22).
